# EUROPÄISCHE PATENTSCHRIFT

(11) **EP 4 219 084 B1**
(45) Veröffentlichungstag und Bekanntmachung des Hinweises auf die Patenterteilung: **25.06.2025**
(21) Anmeldenummer: 22154068.5
(22) Anmeldetag: 28.01.2022
(51) Int. Cl.: B25F 5/02, B27B 17/00, A01G 3/053

(54) **HANDGETRAGENES ARBEITSGERÄT**
HAND-HELD WORKING TOOL
OUTIL DE TRAVAIL PORTATIF

(43) Veröffentlichungstag der Anmeldung: 02.08.2023
(73) Patentinhaber: Andreas Stihl AG & Co. KG, 71336 Waiblingen (DE)
(72) Erfinder: NEFZGER, Markus, 71364 Winnenden (DE); AUPPERLE, Jürgen, 73663 Berglen (DE)
(74) Vertreter: Wasmuth, Rolf

(56) Entgegenhaltungen:
- DE-U1- 20 208 761
- DE-U1- 8 617 528
- SE-B- 388 336
- US-A1- 2005 055 832
- US-A1- 2017 165 863

## Beschreibung

Die Erfindung betrifft ein handgetragenes Arbeitsgerät gemäß dem Oberbegriff des Anspruchs 1.

Es sind handgetragene Arbeitsgeräte, beispielsweise eine Motorkettensäge, eine Heckenschere, oder ähnliche bekannt, deren üblicher Einsatz im Freien erfolgt. Unter einem handgetragenen Arbeitsgerät ist ein Arbeitsgerät zu verstehen, dessen bestimmungsgemäßer Einsatz insbesondere getragen durch den Bediener erfolgt. Bei besonders niedrigen Temperaturen sind die Handgriffe des Arbeitsgerätes kalt. Um die Handgriffe zu erwärmen, ist der Einsatz von Griffheizungen bekannt. Eine Griffheizung kann als elektrische Griffheizung ausgebildet sein, die mit einem Generator oder einer Batterie des Arbeitsgerätes verbunden ist.

Es wurde festgestellt, dass die Funktion derartiger Griffheizungen nach einer gewissen Betriebsdauer der Arbeitsgeräte oftmals nicht mehr gegeben war.

Ein handgetragenes Arbeitsgerät ist in US 2017/165863 A1 offenbart.

Der Erfindung liegt somit die Aufgabe zugrunde, ein handgetragenes Arbeitsgerät anzugeben, dass einen zuverlässigen Betrieb von einem auf einem Handgriff des Arbeitsgerätes angeordneten elektrischen Funktionselementes ermöglicht.

Diese Aufgabe wird durch ein handgetragenes Arbeitsgerät gemäß den Merkmalen nach Anspruch 1 gelöst.

Der Erfindung liegt die Erkenntnis zugrunde, dass der im Betrieb des Arbeitsgerätes auftretende Defekt des oben beschriebenen am Handgriff angeordneten Funktionselementes, wie beispielsweise eine Griffheizung, auf einen Kabelbruch des Verbindungskabels zurückzuführen ist. Das Verbindungskabel zwischen der Griffheizung und der Stromquelle für die Griffheizung verläuft an der Außenseite des Griffrohres und ist durch einen Griffüberzug bedeckt. Im Einsatz des Arbeitsgerätes können unter anderem Äste von Gebüschen, Sträuchern oder Bäumen an dem Handgriff entlang streifen und dabei den Griffüberzug sowie das Verbindungskabel beschädigen.

Das erfindungsgemäße handgetragene Arbeitsgerät umfasst ein Gehäuse, wobei das Gehäuse eine Oberseite, eine Unterseite, eine erste Längsseite und eine zweite Längsseite aufweist, wobei die Oberseite und die Unterseite über die erste Längsseite und über die zweite Längsseite miteinander verbunden sind. Das handgetragene Arbeitsgerät umfasst einen in dem Gehäuse angeordneten Antriebsmotor, wobei der Antriebsmotor ein am vorderen Ende des Gehäuses angeordnetes Werkzeug antreibt. Das handgetragene Arbeitsgerät umfasst einen vorderen Handgriff und einen hinteren Handgriff, wobei der vordere Handgriff als ein Bügelgriff ausgebildet ist und einen sich entlang der Oberseite des Gehäuses erstreckenden Querabschnitt und einen entlang einer der beiden Längsseiten des Gehäuses erstreckenden Seitenabschnitt aufweist. Der vordere Handgriff weist eine Wand und einen von der Wand umschlossenen Innenraum auf, wobei die Wand des vorderen Handgriffes eine dem Innenraum zugewandte Innenseite und eine dem Innenraum abgewandte Außenseite umfasst. Im Gehäuse ist ein erstes elektrisches Funktionselement angeordnet. Auf der Außenseite des vorderen Handgriffes ist mindestens ein zweites elektrisches Funktionselement angeordnet. Das erste elektrische Funktionselement ist mit dem zweiten Funktionselement über mindestens ein Verbindungskabel verbunden. Das mindestens eine Verbindungskabel ist zumindest teilweise im Innenraum des vorderen Handgriffes im Bereich des Seitenabschnitts des vorderen Handgriffs angeordnet.

Das Verbindungskabel liegt zumindest teilweise im Innenraum des Seitenabschnittes des vorderen Handgriffes und ist somit durch den vorderen Handgriff geschützt. Äste oder ähnliches können somit den vorderen Handgriff des Arbeitsgerätes am Seitenabschnitt tangieren ohne dabei das Verbindungskabel zu beschädigen. Ein zuverlässiger Betrieb des zweiten elektrischen Funktionselementes ist somit gewährleistet.

Das zweite elektrische Funktionselement ist bevorzugt als Heizfolie ausgebildet. In einer alternativen Ausgestaltung kann das zweite elektrische Funktionselement auch als Sensor ausgebildet sein.

Das erste elektrische Funktionselement ist bevorzugt eine Energiequelle zur Versorgung des zweiten Funktionselementes mit elektrischem Strom. Die Energiequelle ist bevorzugt ein Generator. Alternativ kann die Energiequelle auch eine Batterie sein. Das erste elektrische Funktionselement kann alternativ auch eine Steuereinheit zur Verarbeitung von Datensignalen sein. Die Steuereinheit ist über eine Energiequelle mit elektrischem Strom versorgt.

Es ist vorteilhaft vorgesehen, dass an der Wand des vorderen Handgriffes, insbesondere benachbart, zum zweiten elektrischen Funktionselement eine Öffnung vorgesehen ist, wobei sich die Öffnung von der Außenseite der Wand zur Innenseite der Wand erstreckt, wobei das mindestens eine Verbindungskabel von der Außenseite der Wand durch die Öffnung in den Innenraum des Handgriffes verläuft. Die Öffnung ist vorzugsweise mit einer Tülle als Kantenschutz versehen. Die Tülle ist vorzugsweise aus einem Elastomer gebildet. Dadurch kann ein Aufscheuern des Verbindungskabels an der Öffnung vermieden.

Es ist bevorzugt vorgesehen, dass der vordere Handgriff einen in etwa horizontal verlaufenden Halteabschnitt aufweist, wobei die Öffnung der Wand außerhalb des Halteabschnittes vorgesehen ist. Der horizontal verlaufende Halteabschnitt ist zum Halten des Arbeitsgerätes im bestimmungsgemäßen Betrieb des Arbeitsgerätes vorgesehen ist.

Demnach ist der horizontal verlaufende Halteabschnitt der Bereich des vorderen Handgriffes, den der Bediener am häufigsten umgreift. Wäre die Öffnung also an dem horizontal verlaufenden Halteabschnitt vorgesehen, würde diese der Bediener spüren. Der Bediener könnte die Öffnung aus ergonomischer Sicht als unangenehm wahrnehmen. Um diesen Umstand zu vermeiden, ist die Öffnung außerhalb des horizontal verlaufenden Abschnittes vorgesehen.

Es ist vorzugsweise vorgesehen, dass der Querabschnitt und der Seitenabschnitt des vorderen Handgriffes über einen gekrümmten Verbindungsabschnitt miteinander verbunden sind, wobei die Öffnung im Seitenabschnitt benachbart zum Verbindungsabschnitt vorgesehen ist. Eine Öffnung im horizontal verlaufenden Abschnitt des vorderen Handgriffes ist aus bereits oben beschriebenen Gründen zu vermeiden. Ferner sollte die Öffnung auch nicht in dem gekrümmten Verbindungsabschnitt ausgebildet sein. Eine Öffnung in der Krümmung wäre aus Gründen der hohen Spannungsverhältnisse und der damit verbunden Schwächung der Festigkeit des vorderen Handgriffes nachteilig. Ferner sollte das Verbindungskabel zu möglichst großen Teilen durch den vorderen Handgriff geschützt sein. Daher ist die Öffnung im Seitenabschnitt vorzugsweise unmittelbar angrenzend an dem Krümmungsabschnitt des vorderen Handgriffes vorzusehen. Der Handgriff ist bevorzugt aus Aluminium oder Kunststoff gebildet.

Es ist insbesondere vorgesehen, dass das Arbeitsgerät eine Griffrohreinlage zur Befestigung des vorderen Handgriffes am Gehäuse des Arbeitsgerätes umfasst, wobei die Griffrohreinlage im Innenraum des Handgriffes an einem Ende des vorderen Handgriffes angeordnet ist. Die Griffrohreinlage weist einen Kabelkanal zur Führung des mindestens einen Verbindungskabels auf. Bei der Montage des Arbeitsgerätes kann die Griffrohreinlage in den vorderen Handgriff eingeführt werden, wobei das Verbindungskabel dabei in dem Kabelkanal geführt ist. Somit kann vermieden werden, dass sich das Verbindungskabel zwischen der Griffrohreinlage und dem Handgriff verklemmt. Die Griffrohreinlage weist eine Kabelfixierung zur Klemmung des mindestens einen Verbindungskabels auf. Ist also die Griffrohreinlage beinahe vollständig in den vorderen Handgriff eingeführt, kann das Verbindungskabel in der Kabelfixierung fixiert werden. Somit kann gezielt die Länge des Abschnittes des Verbindungskabels eingestellt werden, der in dem vorderen Handgriff vorgesehen ist. Zum anderen ist die Anbindungsstelle des Verbindungskabels an dem zweiten Funktionselement durch die Klemmung an der Griffrohreinlage entlastet. Insbesondere bei der Montage des Arbeitsgerätes kann es zu einer Zugbelastung des Verbindungskabels kommen. Durch die Klemmung des Verbindungskabels wird die Zugbelastung bereits an der Klemmstelle des Verbindungskabels abgefangen. Die Anbindung des Verbindungskabels und des zweiten elektrischen Funktionselementes bleibt unbeschädigt.

Es ist vorteilhaft vorgesehen, dass das Verbindungskabel von der Außenseite der Wand des vorderen Handgriffes über den Innenraum des vorderen Handgriffes durch den Verbindungskanal der Griffrohreinlage bis zu dem einen Ende des vorderen Handgriffes verläuft. Somit liegt das Verbindungskabel zu großen Teilen vor Außenbelastungen im vorderen Handgriff geschützt.

Weitere Merkmale der Erfindung ergeben sich aus der Beschreibung und der Zeichnung. Nachstehend ist ein im Einzelnen beschriebenes Ausführungsbeispiel wiedergegeben. Es zeigen:
- Fig. 1: in einer schematischen, ausschnittsweisen, perspektivischen Darstellung eine Motorkettensäge,
- Fig. 2: in einer perspektivischen Darstellung einen vorderen Handgriff und ein elektrisches Funktionselement der Motorkettensäge nach Fig. 1,
- Fig. 3: in einer Seitenansicht den vorderen Handgriff und das elektrische Funktionselement der Motorkettensäge nach Fig. 1,
- Figuren 4 bis 7: in Seitenansicht einzelne Montageschritte bezüglich der Befestigung einer Griffrohreinlage mit Kabelkanal und Kabelfixierung in dem vorderen Handgriff der Motorkettensäge nach Fig. 1 und
- Fig. 8: in einer schematischen, ausschnittsweisen Seitendarstellung die Motorkettensäge nach Fig. 1.

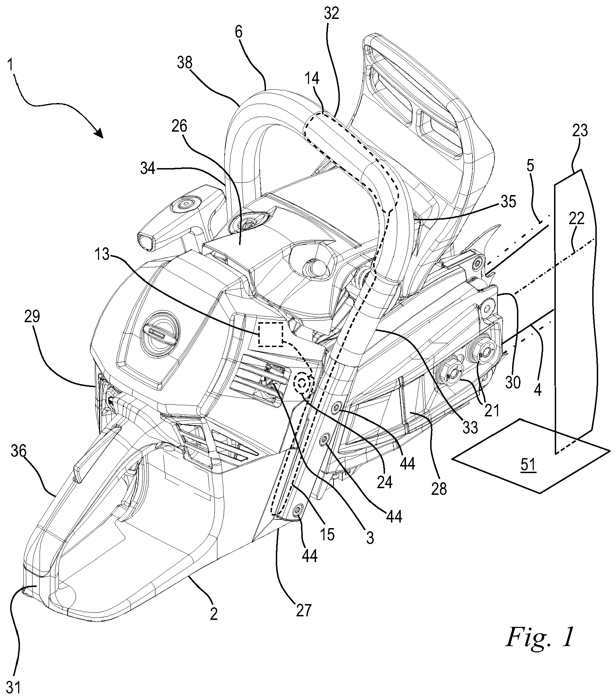

In Fig. 1 ist ein Ausführungsbeispiel eines handgetragenen Arbeitsgerätes 1 gezeigt, welches als eine "rear-handle" Motorkettensäge ausgebildet ist. In einer alternativen Ausführung kann das Arbeitsgeräte 1 auch eine "top-handle" Motorkettensäge sein. Das Arbeitsgerät kann auch als eine Heckenschere, Trennschleifer, Blasgerät, Freischneider oder dgl. ausgebildet sein. Das Arbeitsgerät 1 umfasst ein Gehäuse 2 und einen im Gehäuse 2 angeordneten Antriebsmotor 3. Der Antriebsmotor 3 ist im bevorzugten Ausführungsbeispiel als Verbrennungsmotor ausgebildet. In einer alternativen Ausgestaltung des Arbeitsgerätes 1 kann es zweckmäßig sein, den Antriebsmotor 3 auch als Elektromotor auszubilden, der wiederum über einen Akku oder über ein Anschlusskabel an einem Stromnetz mit Energie versorgt sein kann.

Wie in Fig. 1 gezeigt, weist das Gehäuse 2 eine Oberseite 26, eine Unterseite 27, eine erste Längsseite 28 und eine zweite Längsseite 29 auf. Die Oberseite 26 und die Unterseite 27 sind über die beiden Längsseiten 28, 29 miteinander verbunden. Zudem umfasst das Arbeitsgerät 1 einen vorderen Handgriff 6 und einen hinteren Handgriff 36. Die Handgriffe 6, 36 dienen zum Halten und Führen des Arbeitsgerätes 1. Der hintere Handgriff ist an einem hinteren Ende 31 des Gehäuses 2 ausgebildet. An der dem hinteren Handgriff 36 gegenüberliegenden Seite des Gehäuses 2, also einem vorderen Ende 30 des Gehäuses 2, ragt eine Führungsschiene 4 nach vorn. An der Führungsschiene 4 ist eine Sägekette umlaufend angeordnet, die von dem Antriebsmotor 3 angetrieben ist. Die Sägekette bildet das Werkzeug 5 des Arbeitsgerätes 1.

Der Antriebsmotor 3 treibt über eine nicht näher dargestellte Antriebswelle ein Antriebskettenrad an. Das Antriebskettenrad dient zum Antrieb der Sägekette, die im Betrieb über das Antriebskettenrad geführt ist. Ferner umfasst das Arbeitsgerät 1 eine Spannvorrichtung 21, über die die Führungsschiene 4 in Richtung ihrer Längsachse 22 nach vorne weg vom Antriebskettenrad verschiebbar ist. Die Längsachse 22 verläuft in einem auf einem ebenen horizontalen Boden 51 abgestellten Zustand des Arbeitsgerätes 1 mittig durch die Führungsschiene 4 in etwa parallel zum horizontalen Boden 51. Der Begriff "in etwa" ist derart zu verstehen, dass die Längsachse 22 der Führungsschiene 4 mit dem Boden 51 einen Winkel von höchstens 15° einschließt. Die Führungsschiene 4 besitzt eine Längsebene 23, welche in einem auf einem ebenen horizontalen Boden 51 abgestellten Zustand des Arbeitsgerätes 1 die Längsachse 22 enthält und senkrecht zum Boden 51 steht.

Im Ausführungsbeispiel ist der vordere Handgriff 6 als ein Bügelgriff ausgebildet. Der vordere Handgriff 6 ist aus einem Griffrohr gebildet. Der vordere Handgriff 6 ist bevorzugt aus Aluminium oder Kunststoff gebildet ist. Der vordere Handgriff 6 weist einen sich entlang der Oberseite 26 des Gehäuses 2 erstreckenden Querabschnitt 32, einen sich entlang der ersten Längsseite 28 erstreckenden Seitenabschnitt 33 und einen sich entlang der zweiten Längsseite 29 erstreckenden, weiteren Seitenabschnitt 34 auf. An den jeweiligen Enden des vorderen Handgriffes 6 ist dieser an dem Gehäuse 2 befestigt. Das Ende der ersten Längsseite 28 des vorderen Handgriffes 6 ist an dem Seitenabschnitt 33 des Gehäuses 2 befestigt. Das andere Ende des vorderen Handgriffes 6 ist an der Unterseite 27 des Gehäuses 2 befestigt.

Wie in Fig. 1 gezeigt, ist im Gehäuse 2 ein lediglich schematisch dargestelltes, elektrisches Funktionselement 13 angeordnet. Das elektrische Funktionselement 13 ist im Ausführungsbeispiel als eine Steuereinheit ausgebildet. Die Steuereinheit ist zur Verarbeitung von Informationen und zur Steuerung verschiedener Komponenten des Arbeitsgerätes 1, wie beispielsweise den Antriebsmotor 3, ausgebildet. Im Ausführungsbeispiel wird die Steuereinheit über einen am Antriebsmotor 3 vorgesehenen Generator mit elektrischem Strom versorgt.

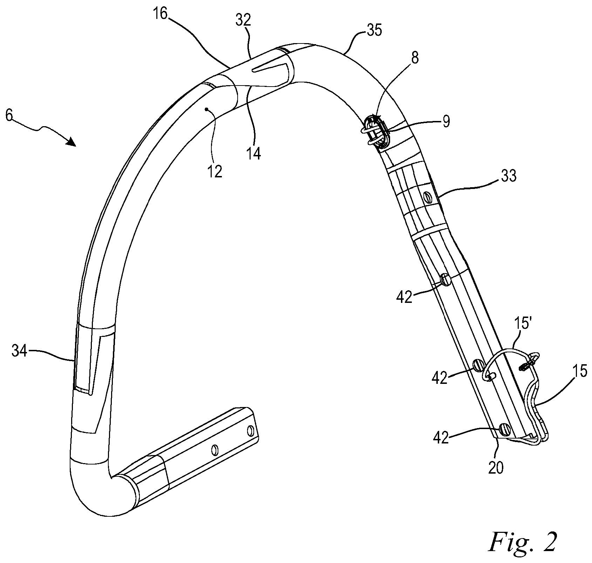

Wie in den Figuren 1 und 2 gezeigt, ist am vorderen Handgriff 6 ein zweites elektrisches Funktionselement 14 angeordnet. Das zweite elektrische Funktionselement 14 ist als Heizfolie ausgebildet. Die Heizfolie dient zur Aufheizung des vorderen Handgriffes 6 und bildet somit eine Griffheizung. In einer alternativen Ausgestaltung des Arbeitsgerätes kann das zweite elektrische Funktionselement 14 auch als ein Sensor ausgebildet sein. Der Sensor ist vorzugsweise dazu ausgebildet, zu erkennen, ob der vordere Handgriff 6 vom Bediener umfasst ist. Der Sensor ist bevorzugt ein kapazitiver Sensor. In einer alternativen Ausgestaltung des Arbeitsgerätes 1 kann es auch zweckmäßig sein, am vorderen Handgriff 6 mehrere elektrische Funktionselemente vorzusehen. Demnach kann das zweite elektrische Funktionselement 14 als Heizfolie und ein drittes elektrisches Funktionselement als Sensor ausgebildet sein. Der vordere Handgriff 6 umfasst zudem vorzugsweise einen Überzug 38. Der Überzug 38 ummantelt insbesondere einen Halteabschnitt 16 des vorderen Handgriffes 6. Der Überzug 38 ist aus einem Kunststoff, insbesondere aus einem Elastomer, gebildet, und dient zur Fixierung des zweiten, elektrischen Funktionselementes 14 auf dem vorderen Handgriff 6. Ferner bietet der Überzug 38 dem Bediener einen besseren, komfortableren Halt am vorderen Handgriff 6.

Wie in den Figuren 1 und 2 gezeigt, umfasst das Arbeitsgerät 1 mindestens ein Verbindungskabel 15, wobei das Verbindungskabel 15 das erste elektrische Funktionselement 13 und das zweite elektrische Funktionselement 14 miteinander verbindet. Der Begriff "Verbindungskabel" ist nicht auf ein Einzelkabel zu beschränken, sondern umfasst auch mehrere Kabel. Vorzugsweise sind die Kabel in Reihe miteinander verbundene Kabel. Wie in Fig. 2 gezeigt, umfasst das Arbeitsgerät 1 neben dem mindestens einem Verbindungskabel 15 ein weiteres Verbindungkabel 15'. Im Ausführungsbeispiel ist das mindestens eine Verbindungskabel 15 ein erster Leiter, das zweite Verbindungskabel 15' ein zweiter Leiter. Im Ausführungsbeispiel verläuft das mindestens eine Verbindungkabel 15 von dem als Heizfolie ausgebildeten elektrischen zweiten Funktionselement 14 zum ersten elektrischen Funktionselement 13, der Steuereinheit.

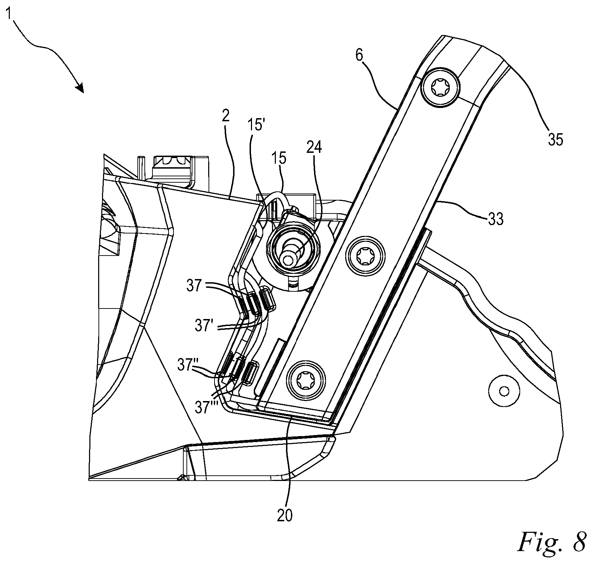

Im Ausführungsbeispiel ist zwischen dem ersten elektrischen Funktionselement 13 und dem zweiten Funktionselement 14 ein Schalter 24 (siehe auch Fig. 8) zwischengeschaltet. Das zweite Verbindungskabel 15' ist unmittelbar mit dem ersten elektrischen Funktionselement 13 verbunden. Ist der Schalter 24 aktiviert, ist der Stromkreis geschlossen und das zweite elektrische Funktionselement 14 kann mit Strom versorgt werden. Ist der Schalter 24 deaktiviert, ist die Stromzufuhr unterbunden.

In einer alternativen Ausgestaltung des Arbeitsgerätes 1 kann es zweckmäßig sein, als erstes elektrisches Funktionselement 13 den Generator vorzusehen. Der Generator ist vorzugsweise ein Wechselspannungsgenerator. Demnach wäre das zweite elektrische Funktionselement 14 über das Verbindungskabel 15 mit dem Generator verbunden. Bevorzugt ist zwischen dem Generator und dem zweiten elektrischen Funktionselement 13 ein Gleichrichter vorgesehen.

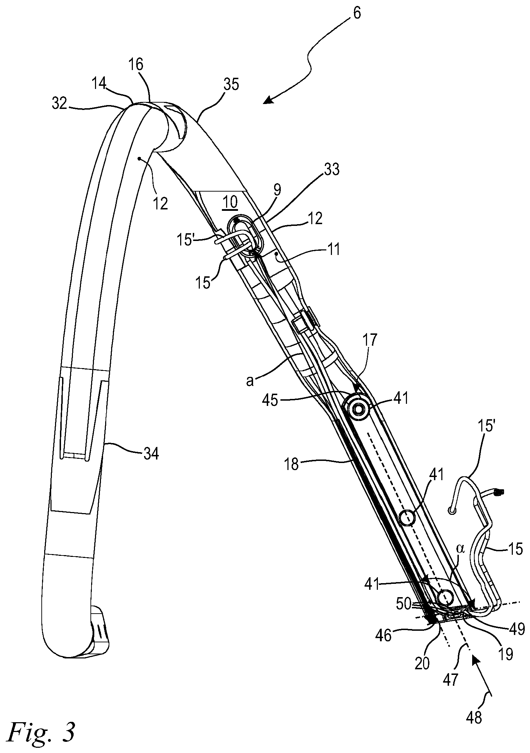

Wie in den Figuren 2 und 3 gezeigt, ist das elektrische zweite Funktionselement 14 auf einer Außenseite 12 des vorderen Handgriffes 6 angeordnet. Die Verbindungskabel 15, 15' verlaufen ausgehend von dem zweiten Funktionselement 14 über eine Öffnung 8 am vorderen Handgriff 6 in einen Innenraum 10 des vorderen Handgriffes 6. Der vordere Handgriff 6 weist eine Wand 7 auf, wobei die Wand 7 den Innenraum 10 des vorderen Handgriffes 6 umschließt. Demnach umfasst die Wand 7 des vorderen Handgriffes 6 eine dem Innenraum 10 zugewandte Innenseite 11 und die dem Innenraum 10 abgewandte Außenseite 12. Die Öffnung 8 erstreckt sich von der Außenseite 12 der Wand 7 zur Innenseite 11 der Wand 7.

Wie in den Figuren 2 und 3 gezeigt, ist das zweite elektrische Funktionselement 14 auf einem in etwa horizontal verlaufenden Halteabschnitt 16 des vorderen Handgriffes 6 angeordnet. Der Halteabschnitt 16 ist an dem Querabschnitt 32 des vorderen Handgriffes 6 ausgebildet. Der Halteabschnitt 16 ist der Bereich des vorderen Handgriffes 6, an welchem der Bediener das Arbeitsgerät 1 in einer für das Arbeitsgerät vorgesehenen Arbeitshaltung bevorzugt greift. Ferner erstreckt sich das zweite elektrische Funktionselement 14 über den Querabschnitt 32 bis hin zu dem weiteren Längsabschnitt 34 des vorderen Handgriffes 6. In einem alternativen Ausführungsbeispiel kann es zweckmäßig sein, dass sich das zweite elektrische Funktionselement 14 von dem weiteren Längsabschnitt 34 über den Querabschnitt 32 bis hin zu dem Längsabschnitt 33 erstreckt.

Wie in den Figuren 2 und 3 gezeigt, ist die Öffnung 8 an dem Seitenabschnitt 33 des vorderen Handgriffes 6 ausgebildet. Die Öffnung 8 ist an einer dem Gehäuse 2 zugewandten Seite des vorderen Handgriffes 6 ausgebildet. Damit liegt die Öffnung 8 und die an der Öffnung 8 verlaufenden Verbindungskabel 15, 15' geschützt vor Ästen, Gestrüpp oder anderen Gegenständen, die in Betrieb des Arbeitsgerätes 1 mit dem vorderen Handgriff 6 in Kontakt kommen können. Wie insbesondere in Fig. 2 gezeigt, ist die Öffnung 8 außerhalb des Halteabschnittes 16 angeordnet. Somit stört die Öffnung 8 den Bediener beim Umgreifen des Halteabschnittes 16 aus ergonomischer Sicht nicht. Die Öffnung 8 ist im bevorzugten Ausführungsbeispiel an dem Seitenabschnitt 33 unmittelbar benachbart zu einem Verbindungsabschnitt 35 des vorderen Handgriffes 6 angeordnet. Der Verbindungsabschnitt 35 ist gekrümmt ausgebildet und verbindet den Querabschnitt 32 und den Seitenabschnitt 33 des vorderen Handgriffes 6. Die Öffnung 8 liegt in anderen Worten unmittelbar unterhalb des Verbindungsabschnittes 35. Die Öffnung 8 ist bevorzugt aus Gründen der Festigkeit und der einfacheren Fertigung des vorderen Handgriffes 8 außerhalb des Verbindungsabschnittes 35 vorzusehen. Natürlich kann es in einer alternativen Ausgestaltung des Arbeitsgerätes 1 auch zweckmäßig sein, die Öffnung 8 im Verbindungsabschnitt 35 vorzusehen. Ferner ist die Öffnung 8 möglichst "oben" an dem Seitenabschnitt 33, also benachbart zum Verbindungsabschnitt 35 festzulegen, um die Verbindungskabel 15, 15' über einen möglichst weiten Bereich in dem vorderen Handgriff 6 geschützt führen zu können.

Die nicht näher dargestellten Anschlüsse des zweiten elektrischen Funktionselementes 14 für die Verbindungskabel 15, 15' sind im bevorzugten Ausführungsbeispiel an der Außenseite 12 im Verbindungsabschnitt 35 angeordnet sind. Es kann auch zweckmäßig sein, dass die Anschlüsse des zweiten elektrischen Funktionselementes 14 für die Verbindungskabel 15, 15' an der Außenseite 12 im Querabschnitt 32 des vorderen Handgriffes 6 angeordnet sind. Die Verbindungskabel 15, 15' verlaufen an der Außenseite 12 des vorderen Handgriffes 6 ausgehend vom Verbindungsabschnitt 35 über die Öffnung 8 in den Innenraum 10 des vorderen Handgriffes 6. An der Öffnung 8 ist eine Tülle 9 vorgesehen, wobei die Tülle 9 einen Kantenschutz an der Öffnung 8 bildet. Dadurch werden Beschädigungen der Verbindungskabel 15, 15' vermieden. Die Verbindungskabel 15, 15' verlaufen von dem Innenraum 10 an der Öffnung 8 bis zu einem Ende 20 des Handgriffes 6.

Wie in Fig. 8 gezeigt, verlassen die Verbindungskabel 15, 15' an dem Ende 20 des Handgriffes 6 den Innenraum 10 des vorderen Handgriffes 6. Die Verbindungskabel 15, 15' verlaufen ausgehend von dem Ende 20 des vorderen Handgriffes 6 an dem Gehäuse 2 des Arbeitsgerätes entlang zum ersten elektrischen Funktionselement 13. Wie bereits oben beschrieben, ist das mindestens eine Verbindungskabel 15 über einen Schalter 24 mit dem ersten elektrischen Funktionselement 13 verbunden. Die Verbindungskabel 15, 15' sind an dem Gehäuse 2 des Arbeitsgerätes 1 über mehrere Klemmen 37, 37', 37", 37‴ gehalten.

Wie in Fig. 3 gezeigt, umfasst das Arbeitsgerät 1 eine Griffrohreinlage 17. Die Griffrohreinlage 17 ist vorzugsweise aus einer Metalllegierung gebildet. Die Griffrohreinlage 17 dient zur Befestigung des vorderen Handgriffes 6 am Gehäuse 2 des Arbeitsgerätes 1. Die Griffrohreinlage 17 ist an dem einen Ende 20 des vorderen Handgriffes 6 im Innenraum 10 des vorderen Handgriffes 6 angeordnet. Die Griffrohreinlage 17 umfasst mehrere Öffnungen 41, im bevorzugten Ausführungsbeispiel drei Öffnungen 41. Selbstverständlich kann es zweckmäßig sein, im bevorzugten Ausführungsbeispiel weniger oder mehr als drei Öffnungen vorzusehen. Der vordere Handgriff 6 umfasst an seinem Seitenabschnitt 33 ebenfalls Öffnungen 42, die im befestigten Zustand der Griffrohreinlage 17 koaxial zu den Öffnungen 41 der Griffrohreinlage 17 ausgebildet sind. Die Öffnungen 41 der Griffrohreinlage 17 und die Öffnungen 42 des vorderen Handgriffes 6 sind derart ausgebildet, dass der vordere Handgriff 6 mit der Griffrohreinlage 17 über mehrere die Öffnungen 41, 42 durchragende Schrauben 44 an Aufnahmeöffnungen des Gehäuses 2 befestigbar ist. Die Griffrohreinlage 17 stabilisiert den vorderen Handgriff 6, wodurch der vordere Handgriff 6 mit einem hohen Anzugsmoment der Schrauben 44 an dem Gehäuse 2 festgeschraubt werden kann, ohne sich dabei zu verformen.

Wie in Fig. 3 gezeigt, umfasst die Griffrohreinlage 17 einen Kabelkanal 18. Der Kabelkanal 18 dient zur Führung der Verbindungskabel 15, 15'. Der Kabelkanal 18 ist im Ausführungsbeispiel als eine Nut an der Außenseite der Griffrohreinalge 17 ausgebildet. Es kann auch zweckmäßig sein, den Kabelkanal 18 als eine Bohrung durch die Griffrohreinlage 17 auszubilden. Der Kabelkanal 18 erstreckt sich von einem oberen Ende 45 der Griffrohreinlage 17 bis zu einem unteren Ende 46 der Griffrohreinlage 17. Die Griffrohreinlage 17 erstreckt sich in ihrer Längsrichtung 47 von dem oberen Ende 45 bis zu dem unteren Ende 46. Die Längsrichtung 47 der Griffrohreinlage 17 entspricht der Einsteckrichtung 48 der Griffrohreinalge 17 in den vorderen Handgriff 6. Am unteren Ende 46 der Griffrohreinlage 17 ist an der Griffrohreinlage 17 eine Kabelfixierung 19 zur Klemmung der Verbindungskabel 15, 15'ausgebildet. Die Kabelfixierung 19 ist aus einem weiteren Kabelkanal 49 gebildet, der an dem Kabelkanal 18 anschließt. Der weitere Kabelkanal 49 ist schräg zu dem Kabelkanal 18 der Griffrohreinlage 17 ausgebildet. In einer Blickrichtung in Achsrichtung der Schrauben 43 auf die an dem vorderen Handgriff 6 befestigte Griffrohreinlage 17 schließen die Längsachsen des Kabelkanals 18 der Griffrohreinlage 17 und des weiteren Kabelkanals 49 der Griffrohreinlage 17 einen Winkel α ein, wobei de Winkel α in einem Bereich zwischen 70° und 140°, insbesondere in einem Bereich zwischen 90° und 130° liegt. An dem weiteren Kabelkanal 49 sind mehrere Nasen 50 ausgebildet. Die Nasen 50 sind wechselseitig auf gegenüberliegenden Seiten des weiteren Kabelkanals 49 angeordnet und ragen zumindest teilweise in den weiteren Kabelkanal 49. Durch die wechselseitig angeordneten Nasen 50 sind die Verbindungskabel 15, 15' in dem weiteren Kabelkanal 49 geklemmt gehalten.

Das handgeführte Arbeitsgerät 1 umfasst vorzugsweise mindestens eine Kontaktstelle zur Verbindung des zweiten elektrischen Funktionselementes 14 mit dem mindestens einen Verbindungskabel 15, 15'. Die Kontaktstelle ist vorzugsweise in der Nähe der Öffnung 8 ausgebildet. Die Kontaktstelle ist vorzugsweise an dem Verbindungsabschnitt 35 des vorderen Handgriffes 6 vorgesehen. Die Kontaktstelle ist vorzugsweise an einer dem Gehäuse 2 zugewandten Seite des Verbindungsabschnittes 35 des vorderen Handgriffes 6 vorgesehen. Bevorzugt ist die Kontaktstelle als Lötverbindung ausgebildet, um eine freiliegende Kabellänge des mindestens einen Verbindungskabel 15, 15' möglichst kurz zu halten. Die freiliegende Kabellänge ist der Abschnitt des mindestens einen Verbindungskabels 15, 15, der an der Außenseite 12 des vorderen Handgriffes 6 angeordnet ist. Ferner weist das mindestens eine Verbindungskabel 15, 15' eine verdeckte Kabellänge auf, die der Länge des Verbindungskabels 15, 15' von der Öffnung 8 bis zu dem Ende 20 des vorderen Handgriffes 6 entspricht. Die freiliegende Kabellänge entspricht höchstens 20%, insbesondere höchstens 15%, vorzugsweise höchstens 10% der verdeckten Kabellänge des mindestens einen Verbindungskabels. Die freiliegende Kabellänge entspricht höchstens 20%, insbesondere höchstens 15%, vorzugsweise höchstens 10% eines Abstandes a zwischen der Öffnung 8 und des Endes 20 des vorderen Handgriffes 6. Die freiliegende Kabellänge des mindestens einen Verbindungskabels 15, 15' beträgt weniger als 40mm, insbesondere weniger als 30 mm. Die freiliegende Kabellänge beträgt bevorzugt in etwa 25 mm. Die verdeckte Kabellänge des mindestens einen Verbindungskabels 15, 15' liegt in einem Bereich zwischen vorzugsweise 175 mm bis 325 mm, insbesondere zwischen 205 mm bis 275 mm. Die verdeckte Kabellänge des mindestens einen Verbindungskabels 15, 15' beträgt in etwa 235 mm.

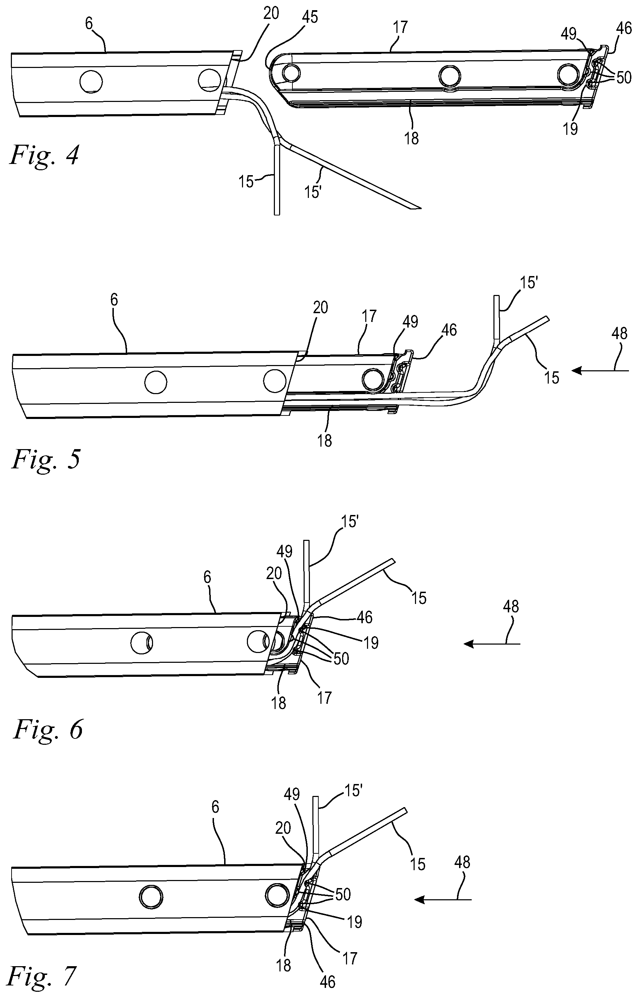

In den Figuren 4 bis 7 sind die einzelnen Schritte zur Montage der Griffrohreinlage 17 an dem vorderen Handgriff 6 gezeigt. In Fig. 4 ist das Ende 20 des vorderen Handgriffs 6 gezeigt, wobei die Verbindungskabel 15, 15' aus dem Ende 20 des vorderen Handgriffes 6 ragen. Die Griffrohreinlage 17 befindet sich außerhalb des vorderen Handgriffes 6. Die Verbindungskabel 15, 15' sind in den Kabelkanal 18 einzulegen. Anschließend ist die Griffrohreinlage 17 in Einsteckrichtung 48 in den Innenraum 10 des vorderen Handgriffes 6 einzuschieben, wie in Fig. 5 gezeigt. Die Verbindungskabel 15, 15' sind dabei durch den Kabelkanal 18 der Griffrohreinlage 17 zu führen. Noch bevor die Griffrohreinlage 17 bis auf Anschlag in den vorderen Handgriff 6 eingeschoben ist, können die Verbindungskabel 15, 15' in den weiteren Kabelkanal 49 über die Nasen 50 eingeklemmt werden (Fig. 6). Anschließend kann die Griffrohreinlage 17 auf Anschlag in den vorderen Handgriff 6 eingeschoben werden.

## Patentansprüche

1. Handgetragenes Arbeitsgerät
- mit einem Gehäuse (2), wobei das Gehäuse (2) eine Oberseite (26), eine Unterseite (27), eine erste Längsseite (28) und eine zweite Längsseite (29) aufweist, wobei die Oberseite (26) und die Unterseite (27) über die beiden Längsseiten (28, 29) miteinander verbunden sind,
- mit einem in dem Gehäuse (2) angeordneten Antriebsmotor (3), wobei der Antriebsmotor (3) ein am vorderen Ende (30) des Gehäuses (2) angeordnetes Werkzeug (5) antreibt,
- mit einem vorderen Handgriff (6) und einem hinteren Handgriff (36),wobei der vordere Handgriff (6) als ein Bügelgriff ausgebildet ist und einen sich entlang der Oberseite (26) des Gehäuses (2) erstreckenden Querabschnitt (32) und einen entlang einer der beiden Längsseiten (28, 29) des Gehäuses (2) erstreckenden Seitenabschnitt (33) aufweist,
- wobei der vordere Handgriff (6) eine Wand (7) und einen von der Wand (7) umschlossenen Innenraum (10) aufweist, wobei die Wand (7) des vorderen Handgriffes (6) eine dem Innenraum (10) zugewandte Innenseite (11) und eine dem Innenraum (10) abgewandte Außenseite (12) umfasst,
- wobei im Gehäuse (2) ein erstes elektrisches Funktionselement (13) angeordnet ist, und
- wobei auf der Außenseite (12) des vorderen Handgriffes (6) mindestens ein zweites elektrisches Funktionselement (14) angeordnet ist,
- wobei das erste elektrische Funktionselement (13) mit dem zweiten Funktionselement (14) über mindestens ein Verbindungskabel (15) verbunden ist,
**dadurch gekennzeichnet, dass** das mindestens eine Verbindungskabel (15) zumindest teilweise im Innenraum (10) des vorderen Handgriffes (6) im Bereich des Seitenabschnitts (33) des vorderen Handgriffs (6) angeordnet ist.

2. Arbeitsgerät nach Anspruch 1,
**dadurch gekennzeichnet, dass** das zweite Funktionselement (14) als Heizfolie ausgebildet ist.

3. Arbeitsgerät nach Anspruch 1,
**dadurch gekennzeichnet, dass** das zweite Funktionselement (14) als Sensor ausgebildet ist.

4. Arbeitsgerät nach einem der Ansprüche 1 bis 3,
**dadurch gekennzeichnet, dass** das erste elektrische Funktionselement (13) eine Energiequelle zur Versorgung des zweiten Funktionselementes (14) mit elektrischem Strom ist.

5. Arbeitsgerät nach Anspruch 3,
**dadurch gekennzeichnet, dass** das erste elektrische Funktionselement (14) eine Steuereinheit zur Verarbeitung von Datensignalen ist.

6. Arbeitsgerät nach einem der Ansprüche 1 bis 5,
**dadurch gekennzeichnet, dass** an der Wand (7) des vorderen Handgriffes (6) zum zweiten elektrischen Funktionselement (14) eine Öffnung (8) vorgesehen ist, wobei sich die Öffnung (8) von der Außenseite (12) der Wand (7) zur Innenseite (11) der Wand (7) erstreckt, wobei das mindestens eine Verbindungskabel (15) von der Außenseite (12) der Wand (7) durch die Öffnung (8) in den Innenraum (10) des Handgriffes (6) verläuft.

7. Arbeitsgerät nach Anspruch 6,
**dadurch gekennzeichnet, dass** die Öffnung (8) mit einer Tülle (9) als Kantenschutz versehen ist.

8. Arbeitsgerät nach einem der Ansprüche 1 bis 7,
**dadurch gekennzeichnet, dass** der vordere Handgriff (6) einen in etwa horizontal verlaufenden Halteabschnitt (16) aufweist, wobei die Öffnung (8) der Wand (7) außerhalb des Halteabschnittes (16) vorgesehen ist.

9. Arbeitsgerät nach einem der Ansprüche 1 bis 8,
**dadurch gekennzeichnet, dass** der Querabschnitt (32) und der Seitenabschnitt (33) des vorderen Handgriffes (6) über einen gekrümmten Verbindungsabschnitt (35) miteinander verbunden sind, wobei die Öffnung (8) im Seitenabschnitt (33) benachbart zum Verbindungsabschnitt (35) vorgesehen ist.

10. Arbeitsgerät nach einem der Ansprüche 1 bis 9,
**dadurch gekennzeichnet, dass** der Handgriff (6) aus Aluminium oder Kunststoff gebildet ist.

11. Arbeitsgerät nach einem der Ansprüche 1 bis 10,
**dadurch gekennzeichnet, dass** das Arbeitsgerät (1) eine Griffrohreinlage (17) zur Befestigung des vorderen Handgriffes (6) am Gehäuse (2) des Arbeitsgerätes (1) umfasst, wobei die Griffrohreinlage (17) im Innenraum (10) des Handgriffes (6) an einem Ende (20) des vorderen Handgriffes (6) angeordnet ist.

12. Arbeitsgerät nach Anspruch 11,
**dadurch gekennzeichnet, dass** die Griffrohreinlage (17) einen Kabelkanal (18) zur Führung des mindestens einen Verbindungskabels (15) aufweist.

13. Arbeitsgerät nach Anspruch 11 oder 12,
**dadurch gekennzeichnet, dass** die Griffrohreinlage (17) eine Kabelfixierung (19) zur Klemmung des mindestens einen Verbindungskabels (15) aufweist.

14. Arbeitsgerät nach Anspruch 13,
**dadurch gekennzeichnet, dass** das Verbindungskabel (15) von der Außenseite (12) der Wand (7) des vorderen Handgriffes (6) über den Innenraum (10) des vorderen Handgriffes (6) durch den Verbindungskanal (15) der Griffrohreinlage (17) bis zu dem einen Ende (20) des vorderen Handgriffes (6) verläuft.

## Claims

1. Hand-held implement
- having a housing (2), wherein the housing (2) has a top side (26), a bottom side (27), a first longitudinal side (28) and a second longitudinal side (29), wherein the top side (26) and the bottom side (27) are connected to one another via the two longitudinal sides (28, 29),
- having a drive motor (3) arranged in the housing (2), wherein the drive motor (3) drives a tool (5) arranged at the front end (30) of the housing (2),
- having a front handle (6) and a rear handle (36), wherein the front handle (6) is designed as a bow-type handle and has a transverse portion (32) extending along the top side (26) of the housing (2) and has a side portion (33) extending along one of the two longitudinal sides (28, 29) of the housing (2),
- wherein the front handle (6) has a wall (7) and an interior space (10) enclosed by the wall (7), wherein the wall (7) of the front handle (6) comprises an inner side (11), facing towards the interior space (10), and an outer side (12), facing away from the interior space (10),
- wherein a first electrical functional element (13) is arranged in the housing (2), and
- wherein at least one second electrical functional element (14) is arranged on the outer side (12) of the front handle (6),
- wherein the first electrical functional element (13) is connected to the second functional element (14) via at least one connecting cable (15),
**characterized in that** the at least one connecting cable (15) is arranged at least partially in the interior space (10) of the front handle (6) in the region of the side portion (33) of the front handle (6).

2. Implement according to Claim 1,
**characterized in that** the second functional element (14) is designed as a heating foil.

3. Implement according to Claim 1,
**characterized in that** the second functional element (14) is designed as a sensor.

4. Implement according to one of Claims 1 to 3,
**characterized in that** the first electrical functional element (13) is an energy source for supplying electrical current to the second functional element (14).

5. Implement according to Claim 3,
**characterized in that** the first electrical functional element (14) is a control unit for processing data signals.

6. Implement according to one of Claims 1 to 5,
**characterized in that,** on the wall (7) of the front handle (6), provision is made of an opening (8) to the second electrical functional element (14), wherein the opening (8) extends from the outer side (12) of the wall (7) to the inner side (11) of the wall (7), wherein the at least one connecting cable (15) runs from the outer side (12) of the wall (7) into the interior space (10) of the handle (6) through the opening (8).

7. Implement according to Claim 6,
**characterized in that** the opening (8) is provided with a grommet (9) as edge protection.

8. Implement according to one of Claims 1 to 7,
**characterized in that** the front handle (6) has a holding portion (16) which extends approximately horizontally, wherein the opening (8) at the wall (7) is provided outside the holding portion (16).

9. Implement according to one of Claims 1 to 8,
**characterized in that** the transverse portion (32) and the side portion (33) of the front handle (6) are connected to one another via a curved connecting portion (35), wherein the opening (8) in the side portion (33) is provided adjacent to the connecting portion (35).

10. Implement according to one of Claims 1 to 9,
**characterized in that** the handle (6) is formed from aluminium or plastic.

11. Implement according to one of Claims 1 to 10,
**characterized in that** the implement (1) comprises a handle-tube insert (17) for fastening the front handle (6) to the housing (2) of the implement (1), wherein the handle-tube insert (17) is arranged at one end (20) of the front handle (6) in the interior space (10) of the handle (6).

12. Implement according to Claim 11,
**characterized in that** the handle-tube insert (17) has a cable channel (18) for guiding the at least one connecting cable (15).

13. Implement according to Claim 11 or 12,
**characterized in that** the handle-tube insert (17) has a cable-fixing means (19) for clamping the at least one connecting cable (15).

14. Implement according to Claim 13,
**characterized in that** the connecting cable (15) runs from the outer side (12) of the wall (7) of the front handle (6) as far as one end (20) of the front handle (6) through the connecting channel (15) of the handle-tube insert (17) via the interior space (10) of the front handle (6).

## Revendications

1. Outil de travail à main,
- comprenant un boîtier (2), le boîtier (2) présentant un côté supérieur (26), un côté inférieur (27), un premier côté longitudinal (28) et un deuxième côté longitudinal (29), le côté supérieur (26) et le côté inférieur (27) étant reliés entre eux par les deux côtés longitudinaux (28, 29),
- comprenant un moteur d'entraînement (3) agencé dans le boîtier (2), le moteur d'entraînement (3) entraînant un outil (5) agencé à l'extrémité avant (30) du boîtier (2),
- comprenant une poignée avant (6) et une poignée arrière (36), la poignée avant (6) étant réalisée sous forme de poignée étrier et comprenant une partie transversale (32) s'étendant le long du côté supérieur (26) du boîtier (2) et une partie latérale (33) s'étendant le long de l'un des deux côtés longitudinaux (28, 29) du boîtier (2),
- la poignée avant (6) comprenant une paroi (7) et un espace intérieur (10) entouré par la paroi (7), la paroi (7) de la poignée avant (6) comprenant un côté intérieur (11) tourné vers l'espace intérieur (10) et un côté extérieur (12) opposé à l'espace intérieur (10),
- un premier élément fonctionnel électrique (13) étant agencé dans le boîtier (2), et
- au moins un deuxième élément fonctionnel électrique (14) étant agencé sur la face extérieure (12) de la poignée avant (6),
- le premier élément fonctionnel électrique (13) étant relié au deuxième élément fonctionnel (14) par au moins un câble de connexion (15),
**caractérisé en ce que** ledit au moins un câble de connexion (15) est agencé au moins en partie dans l'espace intérieur (10) de la poignée avant (6) dans la zone de la partie latérale (33) de la poignée avant (6).

2. Outil de travail selon la revendication 1,
**caractérisé en ce que** le deuxième élément fonctionnel (14) est conçu sous la forme d'une feuille chauffante.

3. Outil de travail selon la revendication 1,
**caractérisé en ce que** le deuxième élément fonctionnel (14) est conçu sous la forme d'un capteur.

4. Outil de travail selon l'une des revendications 1 à 3,
**caractérisé en ce que** le premier élément fonctionnel électrique (13) est une source d'énergie pour alimenter le deuxième élément fonctionnel (14) en courant électrique.

5. Outil de travail selon la revendication 3,
**caractérisé en ce que** le premier élément fonctionnel électrique (14) est une unité de commande pour le traitement de signaux de données.

6. Outil de travail selon l'une des revendications 1 à 5,
**caractérisé en ce qu'une** ouverture (8) est prévue sur la paroi (7) de la poignée avant (6) vers le deuxième élément fonctionnel électrique (14), l'ouverture (8) s'étendant de la face extérieure (12) de la paroi (7) vers le côté intérieur (11) de la paroi (7), ledit un câble de connexion (15) s'étendant depuis le côté extérieur (12) de la paroi (7), à travers l'ouverture (8), dans l'espace intérieur (10) de la poignée (6).

7. Outil de travail selon la revendication 6,
**caractérisé en ce que** l'ouverture (8) est pourvue d'un passe-câble (9) servant de protection des bords.

8. Outil de travail selon l'une des revendications 1 à 7,
**caractérisé en ce que** la poignée avant (6) comprend une partie de maintien (16) s'étendant approximativement horizontalement, l'ouverture (8) de la paroi (7) étant ménagée à l'extérieur de la partie de maintien (16).

9. Outil de travail selon l'une des revendications 1 à 8,
**caractérisé en ce que** la partie transversale (32) et la partie latérale (33) de la poignée avant (6) sont reliées entre elles par une partie de liaison courbée (35), l'ouverture (8) étant prévue dans la partie latérale (33) adjacente à la partie de liaison (35).

10. Outil de travail selon l'une des revendications 1 à 9,
**caractérisé en ce que** la poignée (6) est formée d'aluminium ou de matière plastique.

11. Outil de travail selon l'une des revendications 1 à 10,
**caractérisé en ce que** l'outil de travail (1) comprend un insert tubulaire (17) de poignée pour fixer la poignée avant (6) au boîtier (2) de l'outil de travail (1), l'insert tubulaire (17) de poignée étant agencé dans l'espace intérieur (10) de la poignée (6) à une extrémité (20) de la poignée avant (6).

12. Outil de travail selon la revendication 11,
**caractérisé en ce que** l'insert de poignée (17) comprend un canal de câble (18) pour guider ledit au moins un câble de connexion (15).

13. Outil de travail selon la revendication 11 ou la revendication 12,
**caractérisé en ce que** l'insert tubulaire (17) de poignée comprend une fixation de câble (19) pour serrer ledit au moins un câble de connexion (15).

14. Outil de travail selon la revendication 13,
**caractérisé en ce que** le câble de connexion (15) s'étend depuis le côté extérieur (12) de la paroi (7) de la poignée avant (6) à travers l'espace intérieur (10) de la poignée avant (6) par le canal de connexion (15) de l'insert tubulaire (17) de poignée, jusqu'à ladite une extrémité (20) de la poignée avant (6).
